# EUROPEAN PATENT APPLICATION

(11) **EP 4 718 258 A2**
(43) Date of publication of application: **01.04.2026**
(21) Application number: 25215811.8
(22) Date of filing: 14.11.2025
(51) Int. Cl.: G06F 11/07

(54) **CHIP, METHOD FOR MONITORING ABNORMAL START-UP OF CHIP, STORAGE MEDIUM, AND ELECTRONIC DEVICE**

(30) Priority: 17.12.2024 CN 202411873398
(71) Applicant: Horizon Journey (Shanghai) Technology Co., Ltd., Shanghai 201306 (CN)
(72) Inventor: Chen, Chen, Shanghai, 201306 (CN); Li, Wenxing, Shanghai, 201306 (CN); Li, Jing, Shanghai, 201306 (CN); Yang, Ruiqi, Shanghai, 201306 (CN); Yu, Zhengyan, Shanghai, 201306 (CN); Li, Siqi, Shanghai, 201306 (CN)
(74) Representative: Patentanwälte Magenbauer & Kollegen Partnerschaft mbB

(57) **Abstract**

Disclosed are a chip, a method for monitoring abnormal start-up of a chip, a storage medium, and an electronic device. The chip includes: a power management circuit, a processor, and a monitoring circuit, where the power management circuit is configured for, in response to the power management circuit entering an operating state, triggering the monitoring circuit to perform a timing operation; the processor is configured for, in response to the processor entering the operating state, triggering the monitoring circuit to stop performing the timing operation; and the monitoring circuit is configured for determining a numerical relation between a current timing duration of the timing operation and a preset start-up duration, and determining, based on the numerical relation, a startup abnormality monitoring result of the chip. With embodiments of this disclosure, it is enabled to effectively monitor abnormal start-up of the chip.

## Description

### FIELD OF THE INVENTION

This disclosure relates to functional safety technology, and in particular, to a chip, a method for monitoring abnormal start-up of a chip, a storage medium, and an electronic device.

### BACKGROUND OF THE INVENTION

Presently, chips apply widely. For example, in field of intelligent driving, intelligent driving chips apply widely.

Note that normal start-up of a chip is a prerequisite for normal operation of the chip. On the other hand, if a chip starts up abnormally, then it is highly possible that the chip cannot operate normally. Therefore, it is necessary to monitor abnormal start-up of a chip. How to monitor abnormal start-up of a chip is a problem worthy of attention of a person of ordinary skill in the art.

### SUMMARY OF THE INVENTION

To solve the above technical problem, this disclosure provides a chip, a method for monitoring abnormal start-up of a chip, a storage medium, and an electronic device.

Based on an aspect of embodiments of this disclosure, a chip is provided, and includes: a power management circuit, a processor, and a monitoring circuit, wherein
the power management circuit is configured for, in response to the power management circuit entering an operating state, triggering the monitoring circuit to perform a timing operation;
the processor is configured for, in response to the processor entering the operating state, triggering the monitoring circuit to stop performing the timing operation; and
the monitoring circuit is configured for determining a numerical relation between a current timing duration of the timing operation and a preset start-up duration, and determining, based on the numerical relation, a startup abnormality monitoring result of the chip.

Based on another aspect of embodiments of this disclosure, a method for monitoring abnormal start-up of a chip is provided, and includes:
in response to a power management circuit in the chip entering an operating state, performing a timing operation;
in response to a processor in the chip entering the operating state, stopping performing the timing operation;
determining a numerical relation between a current timing duration of the timing operation and a preset start-up duration; and
determining, based on the numerical relation, a startup abnormality monitoring result of the chip.

Based on yet another aspect of embodiments of this disclosure, a computer readable storage medium is provided. The storage medium stores thereon a computer program that, when executed by a processor, causes the processor to implement the method for monitoring abnormal start-up of a chip described above.

Based on still another aspect of embodiments of this disclosure, an electronic device is provided, where the electronic device includes:
a processor; and
a memory configured to store processor-executable instructions.

The processor is configured to read the executable instructions from the memory, and execute the instructions to implement the method for monitoring abnormal start-up of a chip described above.

Based on still another aspect of embodiments of this disclosure, a computer program product is provided. When instructions in the computer program product are executed by a processor, the method for monitoring abnormal start-up of a chip described above is implemented.

Based on a chip, a method for monitoring abnormal start-up of a chip, a storage medium, an electronic device, and a program product according to embodiments of this disclosure,
In the chip according to embodiments of this disclosure, the power management circuit may trigger, in response to itself entering the operating state, the monitoring circuit to perform the timing operation, and the processor may trigger, in response to itself entering the operating state, the monitoring circuit to stop performing the timing operation. Note that in a flow of normal start-up of the chip, upon power-on of the chip, the power management circuit may quickly start to operate. After the power management circuit has operated for a period of time, the processor may start to operate. As the processor may trigger the monitoring circuit to stop performing the timing operation, the monitoring circuit may stop timing before the current timing duration of the timing operation reaches the preset start-up duration. Accordingly, the current timing duration may not exceed the preset start-up duration. On the contrary, if a chip starts up abnormally, it is highly possible that the processor cannot start to operate. Naturally, the processor fails to trigger the monitoring circuit to stop performing the timing operation, the monitoring circuit may remain in the timing state for a long time. Accordingly, it is highly possible that the current timing duration may exceed the preset start-up duration. Therefore, referring to the numerical relation between the current timing duration and the preset start-up duration enables to effectively infer whether the processor is enabled to normally trigger the monitoring circuit to stop performing the timing operation, which thus enables to determine the startup abnormality monitoring result of the chip. For example, if the processor is enabled to normally trigger the monitoring circuit to stop performing the timing operation, the startup abnormality monitoring result of the chip may represent no abnormal start-up of the chip. If the processor fails to normally trigger the monitoring circuit to stop performing the timing operation, the startup abnormality monitoring result of the chip may represent that the chip starts up abnormally.

It may be seen that in embodiments of this disclosure, synergic operation of the power management circuit, the processor, and the monitoring circuit enables to effectively monitor abnormal start-up of the chip. It is to be emphasized that the power management circuit, the processor, and the monitoring circuit respectively are a component of the chip, then, in embodiments of this disclosure, the chip monitors abnormal start-up of the chip itself without external circuit dependency, with greater reliability, as well as higher efficiency of monitoring.

### BRIEF DESCRIPTION OF THE DRAWINGS

FIG. 1 is a schematic diagram of a structure of a chip according to some illustrative embodiments of this disclosure.
FIG. 2 is a schematic diagram of a structure of a chip according to some other illustrative embodiments of this disclosure.
FIG. 3-1 is a schematic diagram of a structure of a monitoring circuit in some illustrative embodiments of this disclosure.
FIG. 3-2 is a schematic diagram of a structure of a monitoring circuit in some other illustrative embodiments of this disclosure.
FIG. 4 is a schematic diagram of a structure of a monitoring circuit in yet some other illustrative embodiments of this disclosure.
FIG. 5 is a schematic diagram of a structure of a chip according to yet some other illustrative embodiments of this disclosure.
FIG. 6 is a schematic diagram of a structure of a monitoring circuit in still some other illustrative embodiments of this disclosure.
FIG. 7 is a flowchart of a method for monitoring abnormal start-up of a chip according to some embodiments of this disclosure.
FIG. 8-1 is a flowchart of a method for determining, based on a numerical relation, a result of monitoring abnormal start-up of a chip in some embodiments of this disclosure.
FIG. 8-2 is a flowchart of a method for determining, based on a numerical relation, a result of monitoring abnormal start-up of a chip and using the result of monitoring abnormal start-up in some embodiments of this disclosure.
FIG. 8-3 is a flowchart of a method for determining, based on a numerical relation, a result of monitoring abnormal start-up of a chip and using the result of monitoring abnormal start-up in some other embodiments of this disclosure.
FIG. 9 is a flowchart of a method for stopping performing a timing operation in some embodiments of this disclosure.
FIG. 10 is a flowchart of a method for monitoring abnormal start-up of a chip according to some other embodiments of this disclosure.
FIG. 11 is a schematic diagram of a structure of an electronic device according to some illustrative embodiments of this disclosure.

### DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements, numeric expressions, and numerical values of components and steps described in these embodiments.

### Disclosure overview

Start-up of a chip may be understood as a series of hardware-level initialization processes starting from power-on or reset of the chip before an operating system or an application starts to run, which relate to a very complex flow such as power-on or reset, clock initialization, memory detection and initialization, hardware self-check, system configuration loading, etc.

If a chip starts up abnormally, then it is highly possible that the chip cannot operate normally. If the chip is an intelligent driving chip applied to field of intelligent driving, then also it is highly possible that a vehicle system cannot operate normally, easily impacting driving safety. Therefore, it is necessary to monitor abnormal start-up of a chip.

### Illustrative structure

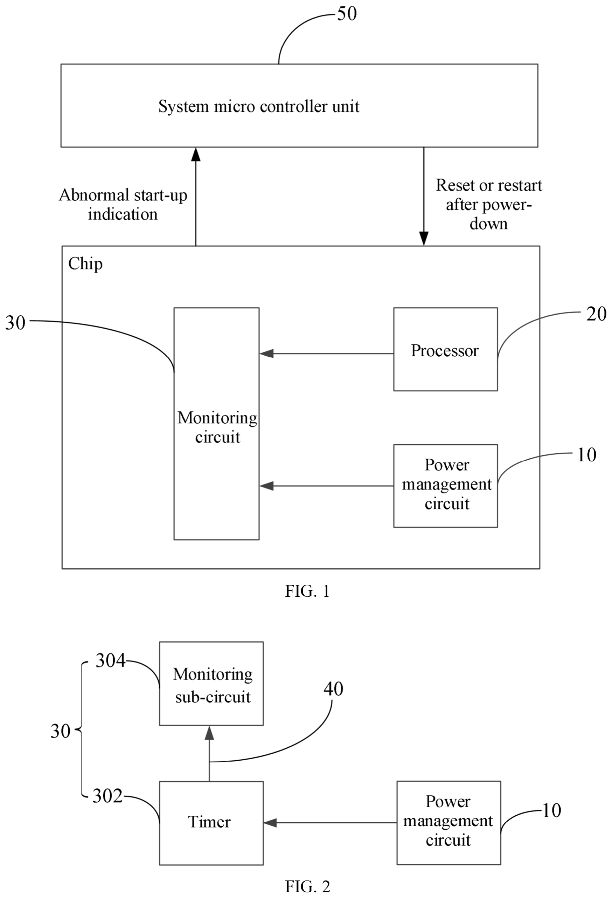

FIG. 1 is a schematic diagram of a structure of a chip according to some illustrative embodiments of this disclosure. As shown in FIG. 1, the chip may include: a power management circuit 10, a processor 20, and a monitoring circuit 30, where
the power management circuit 10 is configured for, in response to the power management circuit 10 entering an operating state, triggering the monitoring circuit to perform a timing operation 30;
the processor 20 is configured for, in response to the processor 20 entering the operating state, triggering the monitoring circuit 30 to stop performing the timing operation; and
the monitoring circuit 30 is configured for determining a numerical relation between a current timing duration of the timing operation and a preset start-up duration, and determining, based on the numerical relation, a startup abnormality monitoring result of the chip.

Optionally, the power management circuit 10 may be a component in the chip configured for power management. The power management circuit 10 may control and monitor the power, which enables to maintain stable and efficient power supply under various operating loads. The power management circuit 10 also may be referred to as a power management unit PMU.

Optionally, the processor 20 may be a component in the chip configured for executing a program instruction and processing data. The processor 20 may include but is not limited to a central processing unit CPU, a micro controller unit MCU, etc.

Optionally, the monitoring circuit 30 may be a core component in the chip configured for monitoring abnormal start-up. The monitoring circuit 30 may be in electrical connection with the power management circuit 10 and the processor 20, respectively. The monitoring circuit 30 may have a timing function. The timing function may be a forward timing function, and may also be a counting down function. The monitoring circuit 30 may be configured with a preset start-up duration. For example, an average duration to be experienced, from power-on of the chip to that the processor 20 starts to operate, in case of normal start-up of the chip, may be counted through experimenting in advance, and a certain margin may be added to the average duration, to obtain a new duration. The new duration may be set to be the preset start-up duration and configured in the monitoring circuit 30.

If the power management circuit 10 enters an operating state, the power management circuit 10 may send a trigger signal to the monitoring circuit 30 through the electrical connection between the power management circuit 10 and the monitoring circuit 30, to trigger the monitoring circuit 30 to perform the timing operation. If the processor 20 enters an operating state, the processor 20 may send a trigger signal to the monitoring circuit 30 through the electrical connection between the processor 20 and the monitoring circuit 30, to trigger the monitoring circuit to stop performing the timing operation 30. The monitoring circuit 30 may remain in a timing state after the monitoring circuit 30 has started the timing operation upon trigger from the power management circuit 10 and before the monitoring circuit 30 stops performing the timing operation upon trigger from the processor 20. In the timing state of the monitoring circuit 30, the monitoring circuit 30 may determine the current timing duration of the timing operation, and determine the numerical relation between the current timing duration and the preset start-up duration.

Optionally, the numerical relation between the current timing duration and the preset start-up duration may be a magnitude relation between the current timing duration and the preset start-up duration, or a proportion relation between the current timing duration and the preset start-up duration. If the numerical relation between the current timing duration and the preset start-up duration is the magnitude relation between the current timing duration and the preset start-up duration, and the magnitude relation specifically is that the current timing duration is greater than or equal to the preset start-up duration (equivalent to the current timing duration reaching the preset start-up duration), the startup abnormality monitoring result of the chip may represent that the chip starts up abnormally. If the numerical relation between the current timing duration and the preset start-up duration is the proportion relation between the current timing duration and the preset start-up duration, for example is a ratio of the current timing duration to the preset start-up duration, and the ratio is greater than or equal to a preset ratio such as 1, 1.1, 1.2, etc., (equivalent to the current timing duration reaching the preset start-up duration), the startup abnormality monitoring result of the chip may represent that the chip starts up abnormally.

In the chip according to embodiments of this disclosure, the power management circuit 10 may trigger, in response to itself entering the operating state, the monitoring circuit to perform the timing operation 30, and the processor 20 may trigger, in response to itself entering the operating state, the monitoring circuit 30 to stop performing the timing operation. Note that in a flow of normal start-up of the chip, upon power-on of the chip, the power management circuit 10 may quickly start to operate. After the power management circuit 10 has operated for a period of time, the processor 20 may start to operate. As the processor 20 may trigger the monitoring circuit to stop performing the timing operation 30, the monitoring circuit 30 may stop timing before the current timing duration of the timing operation reaches the preset start-up duration. Accordingly, the current timing duration may not exceed the preset start-up duration. On the contrary, if a chip starts up abnormally, it is highly possible that the processor 20 cannot start to operate. Naturally, the processor 20 fails to trigger the monitoring circuit to stop performing the timing operation 30, the monitoring circuit 30 may remain in the timing state for a long time. Accordingly, it is highly possible that the current timing duration may exceed the preset start-up duration. Therefore, referring to the numerical relation between the current timing duration and the preset start-up duration enables to effectively infer whether the processor 20 is enabled to normally trigger the monitoring circuit to stop performing the timing operation 30, which thus enables to determine the startup abnormality monitoring result of the chip. For example, if the processor 20 is enabled to normally trigger the monitoring circuit to stop performing the timing operation 30, the startup abnormality monitoring result of the chip may represent no abnormal start-up of the chip. If the processor 20 fails to normally trigger the monitoring circuit to stop performing the timing operation 30, the startup abnormality monitoring result of the chip may represent that the chip starts up abnormally.

It may be seen that in embodiments of this disclosure, synergic operation of the power management circuit 10, the processor 20, and the monitoring circuit 30 enables to effectively monitor abnormal start-up of the chip. It is to be emphasized that the power management circuit 10, the processor 20, and the monitoring circuit 30 respectively are a component of the chip, then, in embodiments of this disclosure, the chip monitors abnormal start-up of the chip itself without external circuit dependency, with greater reliability, as well as higher efficiency of monitoring.

In some optional examples, as shown in FIG. 2, the monitoring circuit 30 may include: a timer 302 and a monitoring sub-circuit 304, wherein
the power management circuit 10 is configured for, in response to the power management circuit 10 entering the operating state, triggering the monitoring circuit 30 to perform the timing operation, including:
the power management circuit 10 is configured for, in response to the power management circuit 10 entering the operating state, triggering the timer 302 to perform the timing operation, and
the monitoring circuit 30 is configured for determining the numerical relation between the current timing duration of the timing operation and the preset start-up duration, and determining, based on the numerical relation, the startup abnormality monitoring result of the chip, including:
the timer 302 being configured for determining the numerical relation between the current timing duration of the timing operation and the preset start-up duration, and in response to the numerical relation representing that the current timing duration reaches the preset start-up duration, sending a timeout signal to the monitoring sub-circuit 304; and
the monitoring sub-circuit 304 being configured for determining a state of receiving the timeout signal, and determining, based on the state of receiving, the startup abnormality monitoring result of the chip.

Optionally, the timer 302 may be a device capable of timing and indicating timeout. The timer 302 may be configured with a preset start-up duration. The timer 302 also may be referred to as a start-up alert timer. The power management circuit 10 may be in electrical connection with the timer 302.

Optionally, the monitoring sub-circuit 304 may be a core component in the monitoring circuit 30 configured for obtaining the result of monitoring abnormal start-up. The monitoring sub-circuit 304 may be in electrical connection with the timer 302.

If the power management circuit 10 enters an operating state, the power management circuit 10 may send the trigger signal to the timer 302 through the electrical connection between the power management circuit 10 and the timer 302, to trigger the timer 302 to perform the timing operation. In the timing state of the timer 302, the timer 302 may compare the current timing duration of the timing operation and the preset start-up duration, to determine the numerical relation between the current timing duration and the preset start-up duration. If the numerical relation represents that the current timing duration does not reach the preset start-up duration, the timer 302 may continue in the timing state. If the numerical relation represents that the current timing duration reaches the preset start-up duration, the timer 302 may send a timeout signal to the monitoring sub-circuit 304. In addition, the timer 302 further may exit the timing state (i.e., to stop timing).

In an example, as shown in FIG. 2, the timer 302 may be connected to (specifically may be in electrical connection with) the monitoring sub-circuit 304 through a timeout signal transmission line 40. If the numerical relation represents that the current timing duration does not reach the preset start-up duration, a level signal transmitted on the timeout signal transmission line 40 may be a low level signal. If the numerical relation represents that the current timing duration reaches the preset start-up duration, the level signal transmitted on the timeout signal transmission line 40 may be a high level signal, and the high level signal may be set to be the timeout signal sent by the timer 302 to the monitoring circuit 304.

The monitoring sub-circuit 304 may determine the state of receiving the timeout signal. The state of receiving may be configured for representing whether the monitoring sub-circuit 304 obtains the timeout signal. The monitoring sub-circuit 304 further may determine, based on the state of receiving, the startup abnormality monitoring result of the chip. For example, if the state of receiving the timeout signal represents that the monitoring sub-circuit 304 obtains the timeout signal, the startup abnormality monitoring result of the chip may represent that the chip starts up abnormally. If the state of receiving the timeout signal represents that the monitoring sub-circuit 304 does not obtain the timeout signal, the startup abnormality monitoring result of the chip may represent no abnormal start-up of the chip.

In embodiments of this disclosure, the power management circuit 10 may trigger, in response to itself entering the operating state, the timer 302 to perform the timing operation, and the timer 302 may send a timeout signal to the monitoring sub-circuit 304 in response to the current timing duration of the timing operation reaching the preset start-up duration. Note that if the monitoring sub-circuit 304 obtains the timeout signal coming from the timer 302, this shows that the timing operation by the timer 302 fails to be stopped by trigger from the processor 20 within the preset start-up duration. That is, the processor 20 fails to enter the operating state within a stipulated time window, it is highly possible that the processor 20 cannot operate normally, and it is highly possible that the chip starts up abnormally. If the monitoring sub-circuit 304 never obtains the timeout signal coming from the timer 302, this shows that the timing operation by the timer 302 is enabled to be stopped within the preset start-up duration by trigger from the processor 20. That is, the processor 20 is enabled to enter the operating state within the stipulated time window, and the processor 20 is enabled to operate normally. Then, the chip starts up normally. Therefore, based on the state of receiving the timeout signal by the monitoring sub-circuit 304, it is enabled to effectively determine the startup abnormality monitoring result of the chip, which facilitates guaranteeing accuracy and reliability of the result of monitoring abnormal start-up.

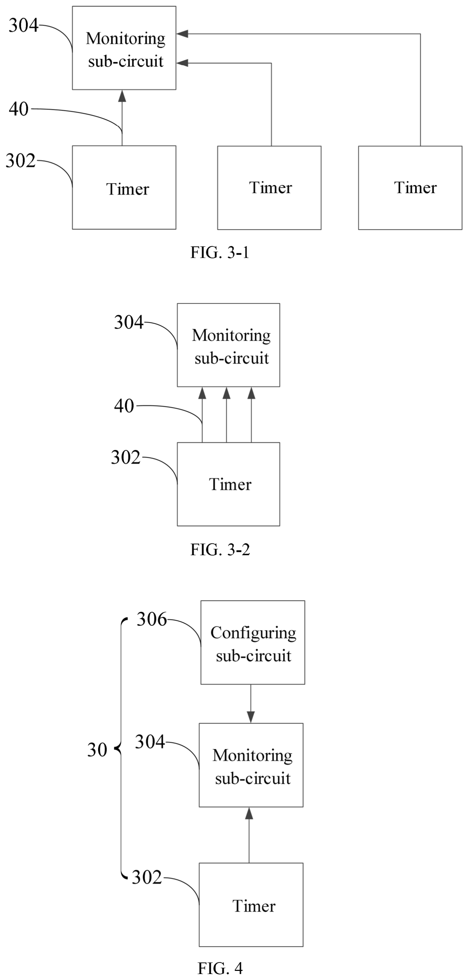

In some optional examples, as shown in FIG. 3-1, the monitoring circuit 30 may include: at least two timers 302, where the at least two timers 302 may correspond to identical preset start-up durations, where
the monitoring sub-circuit 304 is configured for determining, based on the state of receiving the timeout signal, the startup abnormality monitoring result of the chip, including:
in response to the state of receiving representing that the monitoring sub-circuit 304 obtains timeout signals coming from more than one timer 302 of the at least two timers 302, the monitoring sub-circuit 304 is configured for determining the startup abnormality monitoring result of the chip being that there is abnormal start-up.

Optionally, the number of timers 302 included in the monitoring circuit 30 may be N. N may be 2, 3, or an integer greater than 3, without exhaustive enumeration of possible numbers here. The N timers 302 may be configured with identical preset start-up durations. For example, the N timers 302 respectively may be configured with a preset start-up duration of 1 second, or 2 seconds. The N timers 302 may be in electrical connection with the monitoring sub-circuit 304 through N timeout signal transmission lines 40. The N timeout signal transmission lines 40 may be in one-to-one correspondence with the N timers 302.

Optionally, the monitoring sub-circuit 304 may determine the state of receiving the timeout signal. If level signals coming from more than one timeout signal transmission line 40 of the N timeout signal transmission lines 40 are high level signals, this shows that the monitoring sub-circuit 304 obtains timeout signals coming from more than one timer 302. Then, the startup abnormality monitoring result of the chip may be that there is abnormal start-up.

Note that a high level signal may be produced on a timeout signal transmission line 40 due to a cause such as electromagnetic interference, etc., while it may be that the timer 302 has not sent any timeout signal to the monitoring circuit 30 by pulling up the level signal. In view of this, in embodiments of this disclosure, the monitoring circuit 30 may include at least two timers 302 corresponding to identical preset start-up durations, and the monitoring sub-circuit 304 determines, just in case the monitoring sub-circuit 304 obtains timeout signals coming from more than one timer 302, that the startup abnormality monitoring result of the chip is that there is abnormal start-up. This is equivalent to introducing a redundant voting strategy to determine the startup abnormality monitoring result of the chip, which facilitates avoiding adverse impact on determination of the result of monitoring abnormal start-up caused by a factor such as electromagnetic interference, etc., which thereby facilitates guaranteeing accuracy and reliability of the result of monitoring abnormal start-up.

In some optional examples, as shown in FIG. 3-2, the timer 302 may be connected to the monitoring sub-circuit 304 respectively through at least two timeout signal transmission lines 40, where
the monitoring sub-circuit 304 is configured for determining, based on the state of receiving, the startup abnormality monitoring result of the chip, including:
in response to the state of receiving representing that the monitoring sub-circuit 304 obtains the timeout signal respectively through more than one timeout signal transmission line 40 of the at least two timeout signal transmission lines 40, the monitoring sub-circuit 304 is configured for determining the startup abnormality monitoring result of the chip being that there is abnormal start-up.

Optionally, the number of timeout signal transmission lines 40 between the timer 302 and the monitoring sub-circuit 304 may be M. M may be 2, 3, or an integer greater than 3, without exhaustive enumeration of possible numbers here.

Optionally, the monitoring sub-circuit 304 may determine the state of receiving the timeout signal. If level signals coming from more than one timeout signal transmission line 40 of the M timeout signal transmission lines 40 are high level signals, this shows that the monitoring sub-circuit 304 obtains timeout signals sent by the timer 302 respectively through more than one timeout signal transmission line 40. Then, the startup abnormality monitoring result of the chip may be that there is abnormal start-up.

Note that a high level signal may be produced on a timeout signal transmission line 40 due to a cause such as electromagnetic interference, etc., while it may be that the timer 302 has not sent any timeout signal to the monitoring circuit 30 by pulling up the level signal. In view of this, in embodiments of this disclosure, M timeout signal transmission lines 40 may be set between one timer 302 and the monitoring sub-circuit 304, and the monitoring sub-circuit 304 determines, just in case the monitoring sub-circuit 304 obtains the timeout signal respectively through more than one timeout signal transmission line 40, that the startup abnormality monitoring result of the chip is that there is abnormal start-up. This is equivalent to introducing a redundant voting strategy to determine the startup abnormality monitoring result of the chip, which facilitates avoiding adverse impact on determination of the result of monitoring abnormal start-up caused by a factor such as electromagnetic interference, etc., which thereby facilitates guaranteeing accuracy and reliability of the result of monitoring abnormal start-up.

In some optional examples, as shown in FIG. 3-1, the monitoring circuit 30 may include at least two timers 302, where the at least two timers 302 may correspond to different preset start-up durations, where
the monitoring sub-circuit 304 is configured for determining, based on the state of receiving, the startup abnormality monitoring result of the chip, including:
in response to the state of receiving representing that the monitoring sub-circuit 304 obtains timeout signals coming from the respective timers 302, and that the timeout signals coming from the respective timers 302 last durations reaching a preset duration, the monitoring sub-circuit 304 is configured for determining the startup abnormality monitoring result of the chip being that there is abnormal start-up.

Optionally, the number of timers 302 included in the monitoring circuit 30 may be R. R may be 2, 3, or an integer greater than 3, without exhaustive enumeration of possible numbers here. The R timers 302 may respectively be configured with a preset start-up duration, and different timers 302 may be configured with different preset start-up durations. For example, the R timers 302 may be three timers 302, where the first timer 302 may be configured with a preset start-up duration of 1 second, the second timer 302 may be configured with a preset start-up duration of 2 seconds, and the third timer 302 may be configured with a preset start-up duration of 3 seconds. The R timers 302 may be in electrical connection with the monitoring sub-circuit 304 through R timeout signal transmission lines 40. The R timeout signal transmission lines 40 may be in one-to-one correspondence with the R timers 302.

Optionally, the monitoring sub-circuit 304 may determine the state of receiving the timeout signal. If level signals coming from the R timeout signal transmission lines 40 are high level signals, and the high level signals last durations reaching the preset duration, this shows that the monitoring sub-circuit 304 obtains timeout signals coming from the respective timers 302, and the timeout signals coming from the respective timers 302 last durations reaching the preset duration. Then, the startup abnormality monitoring result of the chip may be that there is abnormal start-up. Here, the preset duration may be 5 milliseconds, 8 milliseconds, 10 milliseconds, etc., without exhaustive enumeration of possible numbers here.

Note that a high level signal may be produced on a timeout signal transmission line 40 due to a cause such as electromagnetic interference, etc., while it may be that the timer 302 has not sent any timeout signal to the monitoring circuit 30 by pulling up the level signal. In addition, a high level signal produced due to a cause such as electromagnetic interference, etc., often appears instantly, and may not last for a period of time. In view of this, in embodiments of this disclosure, the monitoring circuit 30 may include at least two timers 302 corresponding to different preset start-up durations, and the monitoring sub-circuit 304 determines, just in case the monitoring sub-circuit 304 obtains timeout signals coming from the respective timers 302, and the timeout signals coming from the respective timers 302 last durations reaching the preset duration, that the startup abnormality monitoring result of the chip is that there is abnormal start-up. This is equivalent to introducing a redundant voting strategy and a duration verifying mechanism (i.e., verifying whether the preset duration is reached) to determine the startup abnormality monitoring result of the chip, which enables to avoid adverse impact of instant appearance of a high level signal due to a factor such as electromagnetic interference, etc., on determination of the result of monitoring abnormal start-up, which thereby facilitates guaranteeing accuracy and reliability of the result of monitoring abnormal start-up.

In some optional examples, as shown in FIG. 4, in addition to including the timer 302 and the monitoring sub-circuit 304, the monitoring circuit 30 further may include a configuring sub-circuit 306, where
the configuring sub-circuit 306 is configured for configuring abnormality reporting configuration information in the monitoring sub-circuit 304, and
the monitoring sub-circuit 304 is configured for: in response to the startup abnormality monitoring result of the chip being that there is abnormal start-up, and the abnormality reporting configuration information indicating to report abnormality, generating abnormal start-up indication; or, the monitoring sub-circuit 304 is configured for: in response to the startup abnormality monitoring result of the chip being that there is abnormal start-up, and the abnormality reporting configuration information indicating to avoid abnormality reporting, recording information on abnormal start-up of the chip.

Optionally, the abnormality reporting configuration information may be configured for indicating whether to report abnormality. For example, the abnormality reporting configuration information may be 1, indicating to report abnormality. Or, the abnormality reporting configuration information may be 0, indicating to avoid abnormality reporting.

Optionally, the configuring sub-circuit 306 may be a circuit capable of configuring another component in the chip. For example, the configuring sub-circuit 306 may configure the preset start-up duration in the timer 302. The configuring sub-circuit 306 may be in electrical connection with the monitoring sub-circuit 304. Through the electrical connection between the configuring sub-circuit 306 and the monitoring sub-circuit 304, the configuring sub-circuit 306 may configure the abnormality reporting configuration information in the monitoring sub-circuit 304.

If the startup abnormality monitoring result of the chip is that there is abnormal start-up, and the abnormality reporting configuration information indicates to report abnormality, the monitoring sub-circuit 304 may generate the abnormal start-up indication. The monitoring sub-circuit 304 further may output the abnormal start-up indication. For example, if the chip is an intelligent driving chip applied to field of intelligent driving, the vehicle system may include a system micro controller unit 50 shown in FIG. 1, the monitoring sub-circuit 304 may report the abnormal start-up indication to the system micro controller unit 50, and the system micro controller unit 50 may perform some processing on the chip, including but not limited to controlling to reset the chip or restart the chip after power-down, etc.

If the startup abnormality monitoring result of the chip is that there is abnormal start-up, and the abnormality reporting configuration information indicates to avoid abnormality reporting, the monitoring sub-circuit 304 may not generate the abnormal start-up indication, and the monitoring sub-circuit 304 further may record the information on abnormal start-up of the chip. For example, the monitoring sub-circuit 304 may record the information on abnormal start-up of the chip in form of a log, where the information on abnormal start-up may include at least information on time that abnormal start-up occurs as monitored.

In embodiments of this disclosure, the configuring sub-circuit 306 may configure the abnormality reporting configuration information in the monitoring sub-circuit 304, such that in case the chip starts up abnormally, based on the abnormality reporting configuration information, the monitoring sub-circuit 304 may decide whether to generate and output the abnormal start-up indication, or to just record the information on abnormal start-up. By generation and output of the abnormal start-up indication, the vehicle system may be notified in time of abnormal start-up of the chip, such that the vehicle system is enabled to perceive the abnormality and perform respective processing, thereby reducing risk of vehicle system crash, improving stability and reliability of the vehicle system. By recording the information on abnormal start-up, the information on abnormal start-up subsequently may be referred to as needed.

In some optional examples, the power management circuit 10 is configured for, in response to the power management circuit 10 entering the operating state, triggering the monitoring circuit 30 to generate first random data based on a preset generating strategy, and
the processor 20 is configured for, in response to the processor 20 entering the operating state, triggering the monitoring circuit 30 to stop performing the timing operation, including:
the processor 20 is configured for, in response to the processor 20 entering the operating state, generating second random data based on the preset generating strategy, where
the monitoring circuit 30 is configured for stopping performing the timing operation in response to the second random data being identical with the first random data.

Optionally, the preset generating strategy may be a strategy set in advance for generating random data. The preset generating strategy for example may be in form of a polynomial. In an example, the polynomial may be: ax⁴+bx³+cx²+dx, where the a, the b, the c, and the d are coefficients set in advance. The monitoring circuit 10 and the processor 20 may respectively be configured in advance with the preset generating strategy. In addition, the monitoring circuit 10 and the processor 20 further may respectively be configured in advance with a preset numerical value. The preset numerical value may be set as needed, which is not limited in this disclosure.

If the power management circuit 10 enters an operating state, the power management circuit 10 may send a trigger signal to the monitoring circuit 30 through the electrical connection between the power management circuit 10 and the monitoring circuit 30, to trigger the monitoring circuit 30 to generate the first random data based on the preset generating strategy. For example, triggered by the power management circuit 10, the monitoring circuit 30 may set the preset numerical value to be the value of x, and put it in the polynomial ax⁴+bx³+cx²+dx for computation, where an obtained computed value may be set to be the first random data.

Similarly, if the processor 20 enters an operating state, the processor 20 may set the preset numerical value to be the value of x, and put it in the polynomial ax⁴+bx³+cx²+dx for computation, where an obtained computed value may be set to be the second random data.

The monitoring circuit 30 may determine whether the second random data and the first random data are identical. If the second random data are identical with the first random data, the monitoring circuit 30 may stop performing the timing operation. If the second random data and the first random data are different, the monitoring circuit 30 may remain in the timing state.

In embodiments of this disclosure, the power management circuit 10 may trigger, in response to itself entering the operating state, the monitoring circuit 30 to generate the first random data based on the preset generating strategy; and in response to itself entering the operating state, the processor 20 may generate the second random data based on the preset generating strategy. As the power management circuit 10 and the processor 20 both generate data based on the preset generating strategy, if the chip starts up normally, the processor 20 is enabled to operate normally, and the first random data generated by the power management circuit 10 and the second random data generated by the processor 20 in theory are identical. In view of this, it may be determined whether the processor 20 actually generates the second random data, and if it does generate the second random data, whether the second random data and the first random data are actually identical, thereby determining whether an actual case and a theoretical case match. If the actual case and the theoretical case match, it may be determined that the processor 20 is enabled to operate normally. Then, the monitoring circuit 30 may stop performing the timing operation, to prevent the current timing duration from reaching the preset start-up duration. If the actual case and the theoretical case do not match, it may be determined that the processor 20 fails to operate normally. Then, the monitoring circuit 30 may remain in the timing state. Accordingly, the current timing duration may reach the preset start-up duration subsequently. Clearly, using embodiments of this disclosure, the numerical relation between the current timing duration and the preset start-up duration is closely related to whether the chip starts up abnormally, and therefore, based on the numerical relation between the current timing duration and the preset start-up duration, it is enabled to effectively determine the startup abnormality monitoring result of the chip.

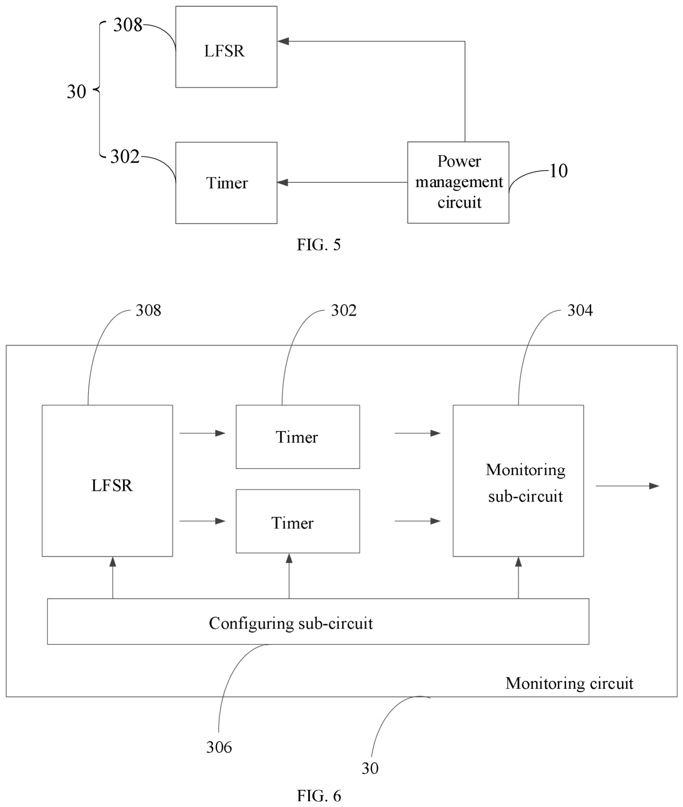

In some optional examples, as shown in FIG. 5, the monitoring circuit 30 may include a timer 302 and a linear feedback shift register LFSR 308, wherein
the power management circuit 10 is configured for, in response to the power management circuit 10 entering the operating state, triggering the monitoring circuit 30 to generate the first random data based on the preset generating strategy, including:
in response to the power management circuit 10 entering the operating state, triggering the LFSR 308 to generate the first random data based on the preset generating strategy,
the power management circuit 10 is configured for, in response to the power management circuit 10 entering the operating state, triggering the monitoring circuit 30 to perform the timing operation, including:
the power management circuit 10 is configured for, in response to the power management circuit 10 entering the operating state, triggering the timer to perform the timing operation 302, and
the monitoring circuit 30 is configured for stopping performing the timing operation in response to the second random data being identical with the first random data, including:
the LFSR 308 being configured for, in response to the second random data being identical with the first random data, triggering the timer 302 to stop performing the timing operation.

Optionally, the LFSR 308 may be a shift register of a particular type. The LFSR 308 may have a pseudo-random number generating function, for example, the LFSR 308 may generate random data based on the preset generating strategy. The LFSR 308 may store therein in advance a preset numerical value. The LFSR 308 may be in electrical connection with the power management circuit 10. The LFSR 308 further may be in electrical connection with the timer 302.

If the power management circuit 10 enters an operating state, the power management circuit 10 may send a trigger signal to the LFSR 308 through the electrical connection between the power management circuit 10 and the LFSR 308, to trigger the LFSR 308 to generate the first random data based on the preset generating strategy. For example, the LFSR 308 may set the preset numerical value to be the value of x, and put it in the polynomial ax⁴+bx³+cx²+dx for computation, to obtain the first random data. The LFSR 308 may store the first random data.

If the power management circuit 10 enters an operating state, through the electrical connection between the power management circuit 10 and the timer 302, the power management circuit 10 further may trigger the timer 302 to perform the timing operation.

If the processor 20 enters an operating state, the processor 20 may set the preset numerical value to be the value of x, and put it in the polynomial ax⁴+bx³+cx²+dx for computation, to obtain the second random data.

The LFSR 308 may obtain the second random data generated by the processor 20, and determine whether the second random data generated by the processor 20 and the first random data stored in the LFSR 308 are identical. If the second random data are identical with the first random data, through the electrical connection between the LFSR 308 and the timer 302, the LFSR 308 may send a trigger signal to the timer 302, to trigger the timer 302 to stop performing the timing operation. If the second random data and the first random data are different, the LFSR 308 sends no trigger signal to the timer 302, and the timer 302 may remain in the timing state.

In embodiments of this disclosure, using the pseudo-random number generating function of the LFSR 308, it is enabled to efficiently and reliably generate the first random data; and in case the first random data are identical with the second random data generated by the processor 20, the LFSR 308 is enabled to timely trigger the timer 302 to stop the timing operation. In this way, synergic operation of the timer 302, the LFSR 308, and the processor 20 enables to closely relate the numerical relation between the current timing duration and the preset start-up duration to whether the chip starts up abnormally, and therefore, based on the numerical relation between the current timing duration and the preset start-up duration, it is enabled to effectively determine the startup abnormality monitoring result of the chip.

In some optional examples, as shown in FIG. 6, the monitoring circuit 30 may include a timer 302, a monitoring sub-circuit 304, a configuring sub-circuit 306, and an LFSR 308. The configuring sub-circuit 306 may configure the timer 302, the monitoring sub-circuit 304, the LFSR 308, etc. For example, the configuring sub-circuit 306 may configure a preset start-up duration in the timer 302. As another example, the configuring sub-circuit 306 may configure abnormality reporting configuration information in the monitoring sub-circuit 304. The timer 302 may perform, under trigger from the power management circuit 10, a timing operation, and in case a current timing duration of the timing operation reaches the preset start-up duration, send a timeout signal to the monitoring sub-circuit 304. The LFSR 308 may trigger, in case the first random data and the second random data are identical, the timer 302 to stop the timing operation. The monitoring sub-circuit 304 may determine, based on a state of receiving the timeout signal, a startup abnormality monitoring result of the chip. For example, the two timers 304 in FIG. 6 respectively send a timeout signal to the monitoring sub-circuit 304, and the timeout signals corresponding respectively to the two timers 304 last durations respectively exceeding a preset duration. Then, the startup abnormality monitoring result of the chip may represent that the chip starts up abnormally.

### Illustrative method

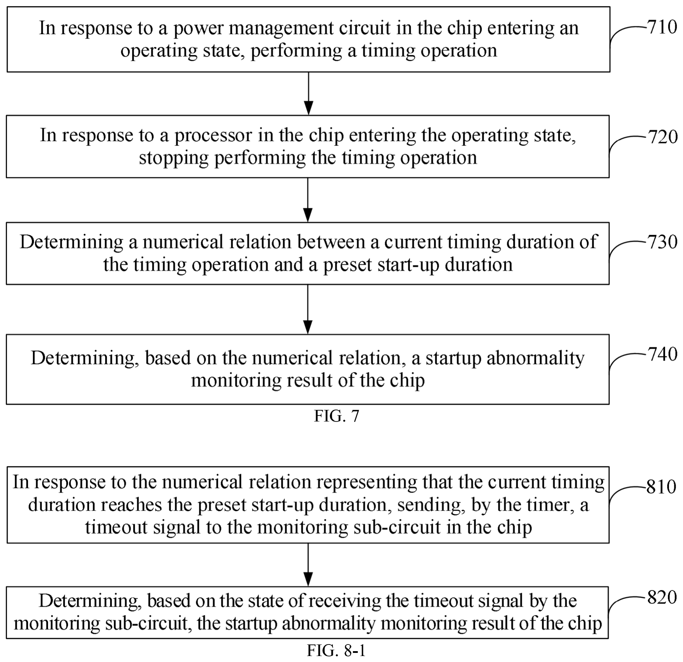

FIG. 7 is a flowchart of a method for monitoring abnormal start-up of a chip according to some embodiments of this disclosure. The method shown in FIG. 7 may include steps as follows.

Step 710, In response to a power management circuit in the chip entering an operating state, performing a timing operation.

Step 720, In response to a processor in the chip entering the operating state, stopping performing the timing operation.

Step 730, Determining a numerical relation between a current timing duration of the timing operation and a preset start-up duration.

Step 740, Determining, based on the numerical relation, a startup abnormality monitoring result of the chip.

In some optional examples, step 710 may include: in response to the power management circuit in the chip entering the operating state, triggering the timer to perform the timing operation in the chip.

As shown in FIG. 8-1, step 740 may include steps as follows.

Step 810, In response to the numerical relation representing that the current timing duration reaches the preset start-up duration, sending a timeout signal to the monitoring sub-circuit by the timer in the chip.

Step 820, Determining, based on a state of receiving the timeout signal by the monitoring sub-circuit, the startup abnormality monitoring result of the chip.

In some optional examples, there are at least two of the timer, and the respective timers correspond to identical preset start-up durations.

Step 820 may include: in response to the state of receiving representing that the monitoring sub-circuit obtains timeout signals coming from more than one timer of the at least two timers, determining the startup abnormality monitoring result of the chip being that there is abnormal start-up.

In some optional examples, the timer is connected to the monitoring sub-circuit respectively through at least two timeout signal transmission lines, where
step 820 may include: in response to the state of receiving representing that the monitoring sub-circuit obtains the timeout signal respectively through more than one timeout signal transmission line of the at least two timeout signal transmission lines, determining the startup abnormality monitoring result of the chip being that there is abnormal start-up.

In some optional examples, there are at least two of the timer, and the respective timers correspond to different preset start-up durations, wherein
step 820 may include: in response to the state of receiving representing that the monitoring sub-circuit obtains timeout signals coming from the respective timers, and that the timeout signals coming from the respective timers last durations reaching a preset duration, determining the startup abnormality monitoring result of the chip being that there is abnormal start-up.

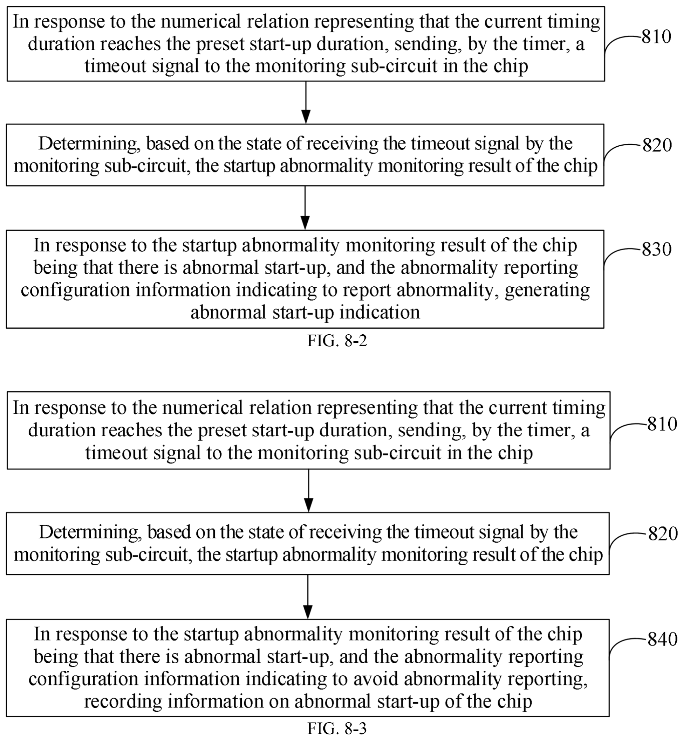

In some optional examples, as shown in FIG. 8-2, the method according to embodiments of this disclosure further may include:
step 830, in response to the startup abnormality monitoring result of the chip being that there is abnormal start-up, and the abnormality reporting configuration information indicating to report abnormality, generating abnormal start-up indication.

In some optional examples, as shown in FIG. 8-3, the method according to embodiments of this disclosure further may include:
step 840, in response to the startup abnormality monitoring result of the chip being that there is abnormal start-up, and the abnormality reporting configuration information indicating to avoid abnormality reporting, recording information on abnormal start-up of the chip.

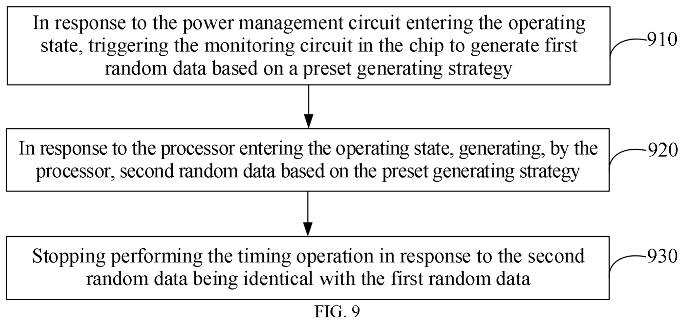

In some optional examples, as shown in FIG. 9, the method according to embodiments of this disclosure further may include steps as follows.

Step 910, In response to the power management circuit entering the operating state, triggering the monitoring circuit in the chip to generate first random data based on a preset generating strategy.

Step 920, In response to the processor entering the operating state, generating second random data by the processor based on the preset generating strategy.

Step 930, Stopping performing the timing operation in response to the second random data being identical with the first random data.

The combination of step 920 and step 930 may be set to be optional implementation of step 720 of this disclosure.

In some optional examples, step 910 may include: in response to the power management circuit entering the operating state, triggering the LFSR in the monitoring circuit to generate the first random data based on the preset generating strategy;
step 710 may include: in response to the power management circuit entering the operating state, triggering the timer to perform the timing operation in the monitoring circuit;
step 930 may include: in response to the second random data being identical with the first random data, triggering, by the LFSR, the timer to stop performing the timing operation.

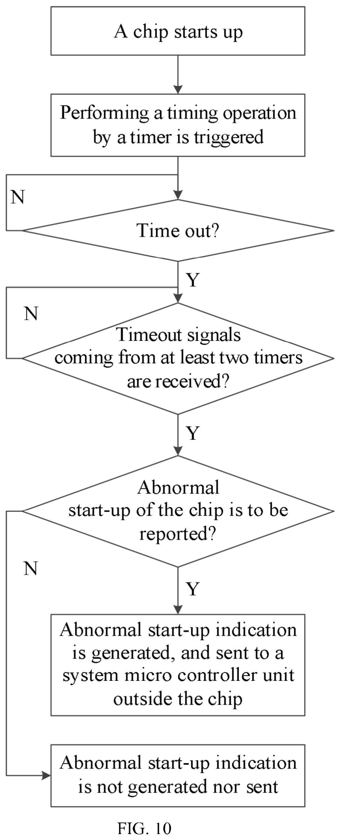

In some optional examples, as shown in FIG. 10, after the chip has started start-up, if the power management circuit enters the operating state, it is enabled to trigger a timer to perform the timing operation. The timer may determine whether the timing operation times out (i.e., whether the current timing duration reaches the preset start-up duration). Assuming that there are three timers in the chip, if the timing operation times out, it may be determined whether a monitoring sub-circuit in the chip receives timeout signals coming from at least two timers. If the monitoring sub-circuit receives timeout signals coming from at least two timers, it may be determined, based on abnormality reporting configuration information, whether to report abnormal start-up of the chip. If abnormal start-up of the chip is to be reported, then an abnormal start-up indication may be generated, and the abnormal start-up indication may be sent to a system micro controller unit external to the chip. If abnormal start-up of the chip is not to be reported, then abnormal start-up indication generation and sending may be skipped.

To sum up, using embodiments of this disclosure, it is enabled to effectively monitor abnormal start-up of a chip, and if the chip starts up abnormally, the abnormality is enabled to be timely discovered and processed, thereby lowering, to the maximum extent, potential impact of abnormal start-up on a vehicle system, guaranteeing stability and reliability of the vehicle system.

In the method according to this disclosure, various optional embodiments, optional implementations, and optional examples disclosed above may be flexibly selected and combined as needed, thereby implementing respective functions and effects, which are not exhaustively enumerated in this disclosure.

### Illustrative electronic device

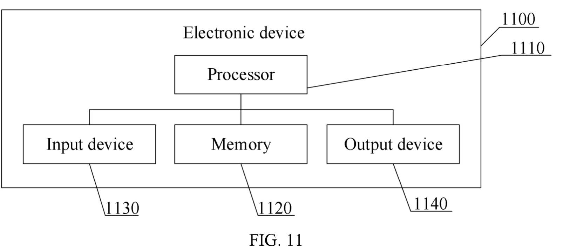

FIG. 11 illustrates a block diagram of an electronic device according to embodiments of this disclosure. The electronic device 1100 includes one or more processors 1110 and a memory 1120.

The processor 1110 may be a central processing unit (CPU) or another form of processing unit having a data processing capability and/or an instruction execution capability, and may control other components in the electronic device 1100 to implement desired functions.

The memory 1120 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 1110 may execute the one or more computer program instructions to implement the method according to the various embodiments of this disclosure that are described above and/or other desired functions.

In an example, the electronic device 1100 may further include an input device 1130 and an output device 1140. These components are connected to each other through a bus system and/or another form of connection mechanism (not shown).

The input device 1130 may further include, for example, a keyboard and a mouse.

The output device 1140 may output various information to the outside, and the output device may include, for example, a display, a speaker, a printer, a communication network, and a remote output device connected to the communication network.

Certainly, for simplicity, FIG. 11 shows only some of components in the electronic device 1100 that are related to this disclosure, and components such as a bus and an input/output interface are omitted. In addition, according to specific application situations, the electronic device 1100 may further include any other appropriate components.

### Illustrative computer program product and computer readable storage medium

In addition to the foregoing method and device, embodiments of this disclosure may also be a computer program product, which includes computer program instructions. When the instructions are run by a processor, the processor is enabled to perform the steps, of the method according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Illustrative method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A chip, **characterized in that** the chip comprises: a power management circuit (10), a processor (20), and a monitoring circuit (30), wherein
the power management circuit (10) is configured for, in response to the power management circuit (10) entering an operating state, triggering the monitoring circuit (30) to perform a timing operation;
the processor (20) is configured for, in response to the processor (20) entering the operating state, triggering the monitoring circuit (30) to stop performing the timing operation; and
the monitoring circuit (30) is configured for determining a numerical relation between a current timing duration of the timing operation and a preset start-up duration, and determining, based on the numerical relation, a startup abnormality monitoring result of the chip.

2. The chip according to claim 1, wherein the monitoring circuit (30) comprises: a timer (302) and a monitoring sub-circuit (304), wherein
the power management circuit (10) is configured for, in response to the power management circuit (10) entering an operating state, triggering the monitoring circuit (30) to perform a timing operation, comprising:
the power management circuit (10) is configured for, in response to the power management circuit (10) entering the operating state, triggering the timer (302) to perform the timing operation, and
the monitoring circuit (30) is configured for determining a numerical relation between a current timing duration of the timing operation and a preset start-up duration, and determining, based on the numerical relation, a startup abnormality monitoring result of the chip, comprising:
the timer (302) being configured for determining the numerical relation between the current timing duration of the timing operation and the preset start-up duration, and in response to the numerical relation representing that the current timing duration reaches the preset start-up duration, sending a timeout signal to the monitoring sub-circuit (304); and
the monitoring sub-circuit (304) being configured for determining a state of receiving the timeout signal, and determining, based on the state of receiving, the startup abnormality monitoring result of the chip.

3. The chip according to claim 2, wherein the monitoring circuit (30) comprises at least two timers (302) corresponding to identical preset start-up durations, wherein
the monitoring sub-circuit (304) is configured for determining, based on the state of receiving, the startup abnormality monitoring result of the chip, comprising:
in response to the state of receiving representing that the monitoring sub-circuit (304) obtains timeout signals coming from more than one timer (302) of the at least two timers (302), the monitoring sub-circuit (304) is configured for determining the startup abnormality monitoring result of the chip being that there is abnormal start-up.

4. The chip according to claim 2, wherein the timer (302) is connected to the monitoring sub-circuit (304) respectively through at least two timeout signal transmission lines, wherein
the monitoring sub-circuit (304) is configured for determining, based on the state of receiving, the startup abnormality monitoring result of the chip, comprising:
in response to the state of receiving representing that the monitoring sub-circuit (304) obtains the timeout signal respectively through more than one timeout signal transmission line of the at least two timeout signal transmission lines, the monitoring sub-circuit (304) is configured for determining the startup abnormality monitoring result of the chip being that there is abnormal start-up.

5. The chip according to claim 2, wherein the monitoring circuit (30) comprises at least two timers (302) corresponding to different preset start-up durations, wherein
the monitoring sub-circuit (304) is configured for determining, based on the state of receiving, the startup abnormality monitoring result of the chip, comprising:
in response to the state of receiving representing that the monitoring sub-circuit (304) obtains timeout signals coming from the respective timers (302), and that the timeout signals coming from the respective timers (302) last durations reaching a preset duration, the monitoring sub-circuit (304) is configured for determining the startup abnormality monitoring result of the chip being that there is abnormal start-up.

6. The chip according to claim 2, wherein the monitoring circuit (30) further comprises a configuring sub-circuit (306), wherein
the configuring sub-circuit (306) is configured for configuring abnormality reporting configuration information in the monitoring sub-circuit (304), and
the monitoring sub-circuit (304) is configured for: in response to the startup abnormality monitoring result of the chip being that there is abnormal start-up, and the abnormality reporting configuration information indicating to report abnormality, generating abnormal start-up indication; or, in response to the startup abnormality monitoring result of the chip being that there is abnormal start-up, and the abnormality reporting configuration information indicating to avoid abnormality reporting, recording information on abnormal start-up of the chip.

7. The chip according to claim 1, wherein
the power management circuit (10) is configured for, in response to the power management circuit (10) entering the operating state, triggering the monitoring circuit (30) to generate first random data based on a preset generating strategy, and
the processor (20) is configured for, in response to the processor (20) entering the operating state, triggering the monitoring circuit (30) to stop performing the timing operation, comprising:
the processor (20) is configured for, in response to the processor (20) entering the operating state, generating second random data based on the preset generating strategy, wherein
the monitoring circuit (30) is configured for stopping performing the timing operation in response to the second random data being identical with the first random data.

8. The chip according to claim 7, wherein the monitoring circuit (30) comprises a timer (302) and a linear feedback shift register LFSR (308), wherein
the power management circuit (10) is configured for, in response to the power management circuit (10) entering the operating state, triggering the monitoring circuit (30) to generate first random data based on a preset generating strategy, comprising:
the power management circuit (10) is configured for, in response to the power management circuit (10) entering the operating state, triggering the LFSR (308) to generate the first random data based on the preset generating strategy,
the power management circuit (10) is configured for, in response to the power management circuit (10) entering an operating state, triggering the monitoring circuit (30) to perform a timing operation, comprising:
the power management circuit (10) is configured for, in response to the power management circuit (10) entering the operating state, triggering the timer (302) to perform the timing operation, and
the monitoring circuit (30) is configured for stopping performing the timing operation in response to the second random data being identical with the first random data, comprising:
the LFSR (308) being configured for, in response to the second random data being identical with the first random data, triggering the timer (302) to stop performing the timing operation.

9. A method for monitoring abnormal start-up of a chip, **characterized in that** the method comprises:
in response to a power management circuit in the chip entering an operating state, performing (710) a timing operation;
in response to a processor in the chip entering the operating state, stopping (720) performing the timing operation;
determining (730) a numerical relation between a current timing duration of the timing operation and a preset start-up duration; and
determining (740), based on the numerical relation, a startup abnormality monitoring result of the chip.

10. The method according to claim 9, wherein the determining (740), based on the numerical relation, a startup abnormality monitoring result of the chip comprises:
in response to the numerical relation representing that the current timing duration reaches the preset start-up duration, sending (810) a timeout signal to the monitoring sub-circuit by the timer in the chip;
determining (820), based on a state of receiving the timeout signal by the monitoring sub-circuit, the startup abnormality monitoring result of the chip.

11. The method according to claim 10, further comprising:
in response to the startup abnormality monitoring result of the chip being that there is abnormal start-up, and the abnormality reporting configuration information indicating to report abnormality, generating (830) abnormal start-up indication.

12. The method according to claim 10, further comprising:
in response to the startup abnormality monitoring result of the chip being that there is abnormal start-up, and the abnormality reporting configuration information indicating to avoid abnormality reporting, recording (840) information on abnormal start-up of the chip.

13. The method according to claim 9, further comprising:
in response to the power management circuit entering the operating state, triggering (910) the monitoring circuit in the chip to generate first random data based on a preset generating strategy;
in response to the processor entering the operating state, generating (920) second random data by the processor based on the preset generating strategy;
stopping (930) performing the timing operation in response to the second random data being identical with the first random data.

14. A computer readable storage medium, wherein the storage medium stores a computer program that, when executed by a processor, causes the processor to implement the method for monitoring abnormal start-up of a chip according to claim 9.

15. An electronic device, **characterized in that** the electronic device comprises:
a processor (1110); and
a memory (1120), configured to store processor-executable instructions, wherein
the processor (1110) is configured to read the executable instructions from the memory (1120), and execute the instructions to implement the method for monitoring abnormal start-up of a chip according to claim 9.
